# EUROPÄISCHE PATENTANMELDUNG

(11) **EP 0 768 744 A2**
(43) Veröffentlichungstag der Anmeldung: **16.04.1997**
(21) Anmeldenummer: 96810670.8
(22) Anmeldetag: 07.10.1996
(51) Int. Cl.: H02J 7/00

(54) **Vorrichtung zum Laden von Batterien von Elektrofahrzeugen**

(30) Priorität: 13.10.1995 CH 2904/95
(71) Anmelder: Asmo Engineering, 4132 Muttenz (CH)
(72) Erfinder: Wick, Thomas, CH-4053 Basel (CH)
(74) Vertreter: Patentanwaltsbüro Feldmann AG

(57) **Zusammenfassung**

Eine Vorrichtung zum Laden von Batterien von mit einer Regelelektronik mit Rekuperationmöglichkeit versehenen Elektrofahrzeugen (5) umfasst eine Gleichstromquelle (7) in einer Ladestation und Kontakte zum Verbinden der Gleichstromquelle (7) in der Ladestation mit dem Elektrofahrzeug (5). Als Laderegelschaltung wird dabei die Rekuperationsmöglichkeit der Regelelektronik verwendet. Dies ermöglicht die Erstellung einer eigentlichen Ladestrasse (8). Sie weist Kontaktschienen (62, 62) auf, mit welchen Elektrofahrzeuge (5, 5') beim Einfahren in die Ladestrasse (8) mittels Schleifkontakten automatisch in elektrischen Kontakt kommen. Da jedes Elektrofahrzeug (5, 5') die eigene Regelschaltung für Fahren und Rekuperieren und somit die eigene Laderegelschaltung besitzt, können die Batterien unterschiedlich ausgerüsteter Elektrofahrzeuge über ihre Schleifkontakte von der gleichen Gleichtromquelle (7) geladen werden.

## Beschreibung

Die Erfindung betrifft eine Vorrichtung zum Laden von Batterien von Elektrofahrzeugen nach dem Oberbegriff des unabhängigen Patentanspruches 1.

Elektrofahrzeuge mit Batterien als Energiespeicher sind heute meist mit einer elektronischen Steuerung/Regelung zur Leistungs- respektive Geschwindigkeits- und Fahrrichtungs-Steuerung versehen. Dabei gibt es Steuerungen, welche auch eine Rekuperationsschaltung aufweisen und somit die beim elektrischen Abbremsen durch den Elektromotor produzierte Energie wieder den Batterien zuführen. Auch die Batterien dieser Fahrzeuge werden meist in stationären Ladestationen nachgeladen. Dabei existieren zwei Möglichkeiten. IN einer Version wird jedes Fahrzeug mittels Kabel und Steckdose ans Netz geschaltet. Dabei muss jedes Fahrzeug mit einem eigenen Ladegerät ausgerüstet sein. In der anderen Version ist ein zentrales Ladegerät in der Ladestation vorhanden und die Fahrzeuge werden mittels Kabeln an Ladesteckdosen mit geregelter Gleichspannungsversorgung aufgeladen. Dabei muss sichergestellt sein, dass alle Fahrzeuge gleiche elektrische Ausrüstungen haben.

Aufgabe der Erfindung ist es, ein System zu schaffen, welches ermöglicht, Elektrofahrzeuge mit verschiedenen elektrischen Ausrüstungen in Beziehung auf Batteriekapazität, Batteriespannung und Motorleistung an einer zentralen Ladestation anzuschliessen, wobei die elektrische Ausrüstung des einzelnen Fahrzeuges auf das notwendigste beschränkt sein soll, um kein unnötiges Gewicht zu verursachen.

Diese Aufgabe wird durch die in den Patentansprüchen angegebene Erfindung gelöst.

Ein zusätzlicher Vorteil der Erfindung ist, dass Elektrofahrzeug und Ladestation mit automatischen Kontakten versehen werden können.

Ein weiterer Vorteil der Erfindung besteht darin, dass die Kontakte nur unter Niederspannung stehen.

Die Erfindung wird nachstehend im Zusammenhang mit den Zeichnungen beschrieben. Es zeigen:
- Figur 1: ein Schema der Umschaltung der Regelelektronik mit Rekuperationsmöglichkeit auf Batterieladung;
- Figur 2: ein Ausschnitt aus einer automatischen Ladestation mit Elektrofahrzeug in Aufsicht;
- Figur 3: eine Anordnung zweier Kontaktschienen in Aufsicht;
- Figur 4: eine Anordnung einer doppelten Kontaktschiene im Querschnitt;
- Figur 5: ein Kontaktmesser im Zusammenhang mit einer Ladeschiene und einem Fahrzeugboden; und
- Figur 6: eine schematische Aufsicht einer Ladestation.

Die Erfindung basiert auf der Möglichkeit, eine Fahr- und Rekuperationsschaltung eines Elektrofahrzeuges auch als Laderegelungselektronik zu verwenden. Grundsätzlich sind die notwendigen elektronischen Elemente darin bereits vorhanden, so dass eigentlich nur ein Umschalten vom Fahr- und Bremsbetrieb auf Ladebetrieb verwirklicht werden muss. Dies ermöglicht es nun, eine zentrale Ladestation einzurichten, welche mit einem Transformator und Gleichrichter ohne weitere Regelelektronik versehen ist. Ladespannung und Ladeströme werden in den einzelnen Fahrzeugen individuell geregelt durch die bereits in jedem und für jedes Fahrzeug optimierte Fahr- beziehungsweise Rekuperations-Elektronik. Somit können an der gleichen Spannung der Ladestation Fahrzeuge mit 24V, 48V oder auch anderen Batteriespannungen geladen werden. Die Ladespannung muss nur unterhalb der Nennspannung der Batterien der Fahrzeuge liegen. Da die Motorsteuerelektronik mit Rekuperationsschaltung immer auch als Aufwärtswandler arbeitet, kann mit einer tiefen, ungefährlichen Niederspannung geladen werden, wobie die fahrzeugeigene Elektronik die korrekte Spannungswandlung zur Batterieladespannung vornimmt.
Es werden nun sogar eigentliche Ladestrassen mit automatischen Kontakten zwischen Ladestation und Fahrzeugen ermöglicht.

Zudem kann eine solche Ladestation mit eigenen Pufferbatterien mit der Spannung der Ausgangsseite der Ladestation versehen werden. Der Transformator und die Anschlussleistung am Netz müssen somit nicht auf die maximale Stromstärke bemessen sein. Zudem kann billiger Nachtstrom zum Laden der Pufferbatterien benützt werden.

Das automatische Ladekontaktsystem hilft erheblich Personal sparen, da jedes Einstecken und Ausstecken von Kabeln entfällt. Zudem können keine Fahrzeuge mit einem falschen Anschluss verbunden werden. Eine eigentliche Ladestrasse kann mit durchgehenden Kontaktschienen ausgerüstet werden, wobei mehrere Fahrzeuge hintereinander in diese Ladestrasse einfahren können und alle Fahrzeuge unterschiedslos richtig geladen werden. Dabei verlässt das als letztes in die Ladestrasse eingefahrene Fahrzeug diese auch wieder als letztes. Dies verkürzt die nötige Stillstandzeit der Elektrofahrzeuge erheblich und schont die Batterien massgebend. Jedes Fahrzeug weist die eigene individuelle Ladesteuerung gemäss der eigenen Ladekennlinie auf.

Diese Art von Vorrichtung zum Laden von Batterien von Elektrofahrzeugen mit automatischem Ladekontaktsystem eignet sich besonders für elektrische Go-Kart Bahnen und ähnliche Einrichtungen. Sie kann aber auch universell für viele Einsatzmöglichkeiten von verschiedensten Elektrofahrzeugen, wie beispielsweise Elektrotransporter bei Post und Bahn, verwendet werden. Die Kontaktschienen sind bei Go-Kart Bahnen vorteilhafterweise am oder auf dem Boden angeordnet, so wie sie weiter unten als Beispiele näher beschrieben sind. Sie können aber auch seitlich an Banden oder oben an der Decke eines Gebäudes hängend angebracht sein. Selbstverständlich sind dann die Schleifkontakte an den Fahrzeugen entsprechend auszuführen und anzuordnen.

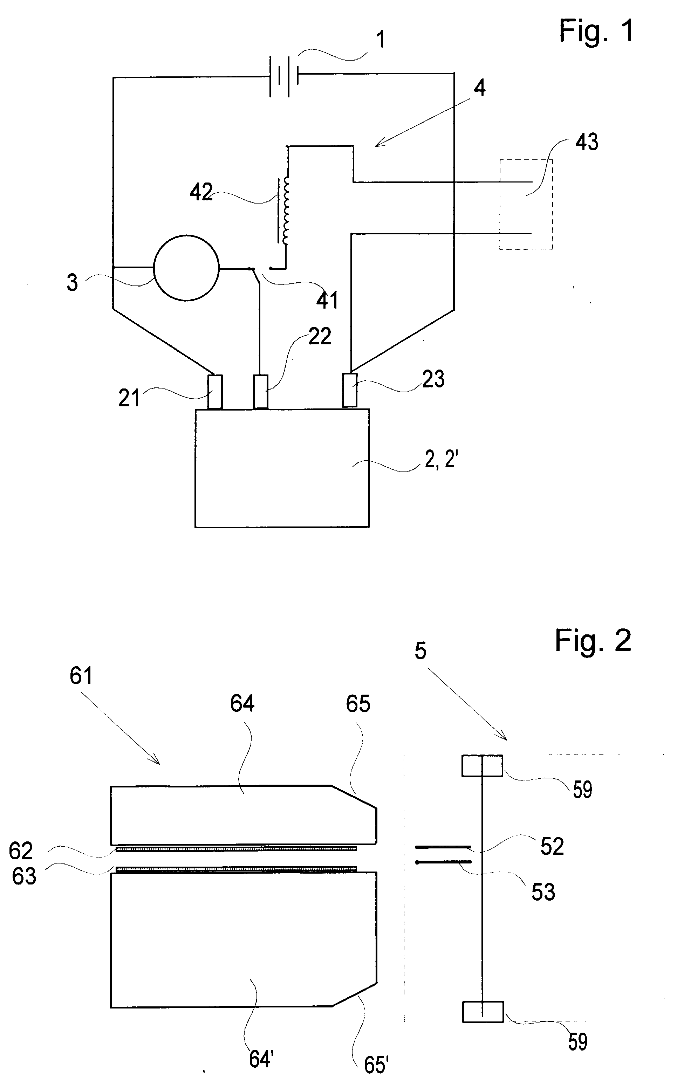

In der Figur 1 ist die Schaltung in einem Elektrofahrzeug dargestellt. Sie besteht wie üblich aus einer Batterie 1, welche über eine Regelelektronik 2 mit Fahr- und Rekuperationsschaltung einen Motor 3 speist und steuert. Die Fahrelektronik weist einen ersten Anschluss 21, einen zweiten oder Regelanschluss 22 und einen dritten Anschluss 23 auf. Der erste Anschluss 21 ist mit der Plus-Seite der Batterie 1 und einer Seite des Elektromotors 3 verbunden. Der dritte Anschluss 23 ist mit der Minus Seite der Batterie 1 und der zweite Anschluss 22 mit der anderen Seite des Elektromotors verbunden. Zwischen dem zweiten Anschluss 22 und der anderen Seite des Motors befindet sich ein Umschalter 41. Der Umschalter 41 verbindet den zweiten Anschluss 22 entweder mit dem Motor 3 oder mit der Ladespeisung 4. Die Ladespeisung 4 besteht aus einer Drossel 42 und der Ladeversorgung 43 mit den weiter unten beschriebenen Schleifkontakten. So ist daher immer entweder der Elektromotor 3 oder die Ladespeisung 4 über die Regelektronik 2 mit der Batterie verbunden. Mittel zum Umschalten von der Lade- auf die Fahrregelung und und umgekehrt können vorgesehen sein. Normalerweise aber wird die Regelelektronik beim Anliegen einer Ladespannung an den Schleifkontakten automatisch auf "Laden" umgeschaltet. Sobald die Batterie voll geladen ist, wird die Regelelektronik automatisch wieder auf "Fahren" zurückgeschaltet. Dies kann mittels einer herkömmlichen Messung des Batterieladungszustandes erfolgen.

In der Figur 2 ist schematisch ein Ausschnitt aus einer automatischen Ladestation mit Elektrofahrzeug in Aufsicht gezeigt.

Ein Elektrofahrzeug 5 mit Achsen und Rädern 59 weist an seiner Unterseite einen ersten Schleifkontakt 52 und einen zweiten Schleifkontakt 53 auf. Diese Schleifkontakte 52, 53 sind entweder als schleifende Kontaktfedern, als Drahtgeflechtbänder, als Kontaktrollen oder wie weiter unten beschrieben als Kontaktmesser ausgeführt. Die Ladestation weist eine Kontaktanordnung 61 auf der Fahrbahn auf. Diese besteht nach diesem Beispiel aus je einem Kontaktschutz 64, 64' für eine erste und eube zweite Kontaktschiene 62, 63. Die erste Kontaktschiene 62 befindet sich in einem Abstand von der zweiten Kontaktschiene 63, welcher dem Abstand zwischen dem ersten Schleifkontakt 52 und dem zweiten Schleifkontakt 53 des Elektrofahrzeuges 5 entspricht. Die Kontaktschutze 64, 64' sind vorzugweise als niedere Aufbauten aus Holz, Kunststoff oder anderen elektrisch isolierenden Materialien auf der Fahrbahn aufgebaut. Sie umfassen und überragen die Kontaktschienen 62, 63 teilweise, um genügend Schutz gegen Berührung zu bieten. Da sie höher als die Fahrbahn sind, können sie als Spurführung für die Elektrofahrzeuge 5 ausgestaltet sein. Dazu weisen sie beispielsweise eine äussere Breite auf, welche der Spurweite der Fahrzeuge respektive der lichten Weite zwischen den Rädern entspricht. Zum leichteren Einfahren eines Fahrzeuges können sie mit abgeschrägten Abschnitten am Anfang und Ende als Einfahrführungen 65, 65' ausgestaltet sein. Dies garantiert auch, dass die Schleifkontakte automatisch richtig mit den Kontaktschienen in Kontakt kommen.

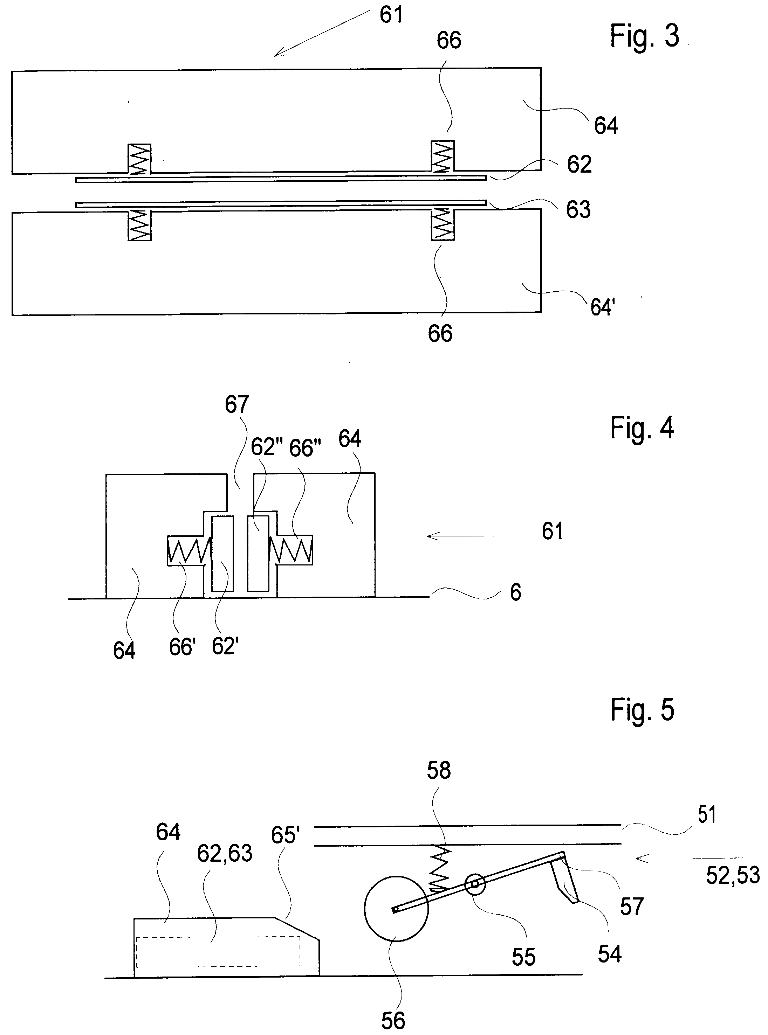

Figur 3 zeigt mehr detailliert eine Anordnung der Kontaktschienen in Aufsicht. Zwei Kontaktschutze 64, 64' sind einander gegenüberliegend im Abstand voneinander angeordnet. Jeder Kontaktschutz 64, 64' weist je eine Kontaktschiene 62, 63 auf und zwar so, dass diese dazwischen einander ebenfalls gegenüberliegen. Jede Kontaktschiene 62, 63 ist über Federn auf den entsprechenden Kontaktschutz federnd abgestützt. Diese federnde Abstützung garantiert guten elektrischen Kontakt zwischen Kontaktschiene und Schleifkontakten.

Figur 4 zeigt eine Anordnung einer doppelten Kontaktschiene im Querschnitt anhand nur der einen ersten Kontaktschiene 62. Bei dieser, für grössere Ströme geeigneten, Ausführungsform einer Kontaktschiene 62 besteht die Kontaktschiene aus zwei parallelen Schienenelementen 62", 62' welche einander in geringem Abstand gegenüberliegen und in einer Art Schlitz 67 im Kontaktschutz 64 angeordnet sind. Beide Schienenelemente 62', 62" sind je über Federelemente 66', 66" auf den Kontaktschutz 64 abgestützt. Der Abstand zwischen den Schienenelementen 62', 62" ist im Ruhezustand etwas kleiner als die Breite der Schleifkontakte der Fahrzeuge. Dies garantiert guten elektrischen Kontakt der Schleifkontakte in der Ladestation.

In der Figur 5 ist ein spezieller Schleifkontakt 52, 53 in einer Ausführungsform als ein Kontaktmesser 54 im Zusammenhang mit einer Ladeschiene 62, 63 und einem Fahrzeugboden 51 eines Elektrofahrzeuges dargestellt. Diese Art von automatischen Schleifkontakten eignet sich besonders für elektrische Go-Karts und ähnliche Fahrzeuge und die entsprechenden Ladestationen. Der Schleifkontakt 52, 53 besteht aus einem unterhalb am Fahrzeugboden 51 um ein Schwenklager 55 schwenkbar angeordneten Schwenkhebel 57. Am einen Ende des Schwenkhebels 57 ist ein Kontaktmesser 54 nach unten reichend angeordnet. Am anderen Ende des Schwenkhebels 57 befindet sich eine Schwenkrolle 56. Der Kontaktschutz 64 der Ladestrasse ist im Bereich der Einfahrführung 65' auch nach oben abgeschrägt. Beim Einfahren eines Elektrofahrzeuges rollt die Schwenkrolle 56 der Schleifkontakte auf dieser Einfahrführung 65 nach oben auf den Kontaktschutz 64. Dabei schwenkt sie den Schwenkhebel 57 so, dass das Kontaktmesser 57 nach unten bewegt wird in die Höhe der Kontaktschiene 62, 63 und mit dieser in Kontakt kommt. Massgebender Vorteil dieser Art von Ausführung besteht darin, dass die Kontaktmesser nur innerhalb der Ladestrasse bis weit unter den Fahrzeugboden 51 reichen. Es ist sogar möglich, dies so auszuführen, dass die Kontaktmesser im normalen Fahrzustand vollständig im Fahrzeugboden untergebracht und nur innerhalb der Ladestrasse in Funktionsstellung sind. Dies trägt zur Sicherheit bei und schützt die Schleifkontakte vor unerwünschter Bodenberührung.

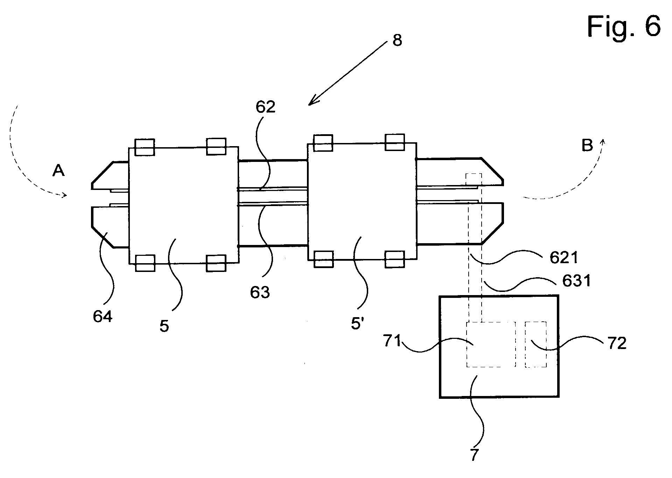

In Figur 6 ist eine eigentliche Ladestrasse 8 einer Ladestation schematisch in Aufsicht gezeigt. In einer Garage oder Box oder dergleichen ist eine Ladestrasse 8 am Boden montiert. Sie besteht aus den oben näher beschriebenen Kontaktschutz 64, Kontaktschienen 62, 62, einer mit den Kontaktschienen 62, 63 verbundenen Stromversorgung 7 mit Transformer und Gleichrichter 71 und allenfalls einer Pufferbatterie 72. Die Ladestrasse ist so lang ausgestaltet, dass sich mehrere Elektrofahrzeuge 5, 5' hintereinander darin befinden können, wobei die Batterien aller Fahrzeuge über ihre Schleifkontakte und die Kontaktschienen 62, 63 gleichzeitig geladen werden können. Die Elektrofahrzeuge, deren Batterien geladen werden müssen, fahren in Richtung A in die Ladestrasse 8 ein und verlassen sie nachher wieder in Richtung B. Da jedes Fahrzeug eine eigene elektronische Steuerung hat, werden alle Batterien richtig geladen, auch wenn die Spannung der Stromquelle unter der Last absinkt oder die Fahrzeuge unterschiedliche elektrische Merkmale aufweisen. Die Verwendung solcher Ladestrassen 8 empfiehlt sich beispielsweise bei Go-Kart Bahnen, auf Bahnhöfen für die elektrischen Transport- Kleinfahrzeugen oder auch für Trolley-Busse und ähnlichen Fahrzeugen mit beschränktem Aktionsradius und kurzen Benützungsintervallen.

## Patentansprüche

1. Vorrichtung zum Laden von Batterien (1) von mit einer Regelelektronik (2) mit Rekuperationmöglichkeit versehenen Elektrofahrzeugen (5) mit Elektromotor (3), umfassend eine Gleichstromquelle (7) in einer Ladestation, einer Laderegelschaltung (2') und mit Kontakten zum Verbinden der Gleichstromquelle (7) in der Ladestation mit der Laderegelschaltung im Elektrofahrzeug (5),
**dadurch gekennzeichnet, dass**
die Regelelektronik (2) mit Rekuperationsmöglichkeit für den Elektromotor (3) des Elektrofahrzeuges (5) als Laderegelschaltung (2') schaltbar ist und dass die Kontakte zum Verbinden der Gleichstromquelle (7) mit der Laderegelschaltung (2') aus am Elektrofahrzeug (5) angeordneten Schleifkontakten (52, 53) und an der Ladestationen angeordneten Kontaktschienen (62, 63) besteht.

2. Vorrichtung nach Anspruch 2, dadurch gekennzeichnet, dass ein Pol (22) der Regelelektronik (2) mit Rekuperationsmöglichkeit vom Elektromotor (3) abkuppelbar und über eine Drossel (42) auf einen der Schleifkontakte (52, 53) umschaltbar ist.

3. Vorrichtung nach Anspruch 1, dadurch gekennzeichnet, dass die Regelelektronik (2) mit Rekuperationsmöglichkeit eine Pulsweitenmodulations-Steuerung ist.

4. Vorrichtung nach Anspruch 1, dadurch gekennzeichnet, dass mindestens einer der Kontakte der Ladestation eine Kontaktschiene (62, 63) ist.

5. Vorrichtung nach Anspruch 4, dadurch gekennzeichnet, dass die Kontaktschiene (62, 63) unter an einem Kontaktschutz (64) angeordnet ist.

6. Vorrichtung nach Anspruch 5, dadurch gekennzeichnet, dass Kontaktschiene (52, 53) und Kontaktschutz (64) oberhalb oder in der Fahrbahn angeordnet sind.

7. Vorrichtung nach Anspruch 4, dadurch gekennzeichnet, dass die Kontaktschiene (62, 63 ein federbelasteter, elektrisch leitender Stab ist.

8. Vorrichtung nach Anspruch 1, dadurch gekennzeichnet, dass mindestens einer der Schleifkontakte (52, 53) ein am Elektrofahrzeug schwenkbar angeordnetes Kontaktmesser (54) ist

9. Vorrichtung nach Anspruch 1, dadurch gekennzeichnet, dass mindestens einer der Schleifkontakte (52, 53) seitlich oder oben am Elektrofahrzeug (5) angeordnet ist.

10. Vorrichtung nach Anspruch 1, dadurch gekennzeichnet, dass die Ladestation eine Batterie (72) als Puffer zur Abdeckung von Spitzenbelastungen aufweist.

11. Vorrichtung nach Anspruch 1, dadurch gekennzeichnet, dass die Kontaktschienen (62, 63) in einer eigentlichen Ladestrasse (8) für eine Mehrzahl von Elektrofahrzeugen zusammengefasst sind.
